# EUROPEAN PATENT APPLICATION

(11) **EP 4 823 010 A1**
(43) Date of publication of application: **14.10.2026**
(21) Application number: 25170062.1
(22) Date of filing: 11.04.2025
(51) Int. Cl.: H04B 10/071, H04B 10/272

(54) **APPARATUS AND METHOD FOR OPTICAL SENSING**

(71) Applicant: Nokia Solutions and Networks Oy, 02610 Espoo (FI)
(72) Inventor: STRAUB, Michael, 75433 Maulbronn (DE); BONK, Rene, 75181 Pforzheim (DE)
(74) Representative: Zinsinger, Norbert

(57) **Abstract**

The present invention discloses an apparatus for use by an OLT (210) connected to a plurality of ONUs (231, 232, 233, 234) via an ODN comprising at least one adjustable power splitter with a variable power split ratio, the apparatus (201) comprising means for: configuring a power split ratio of a subset of the adjustable power splitter(s) (221, 222) related to a first optical path, thereby each adjustable power splitter in the subset distributes substantially more optical power to a dominant branch than to other branch(es); initiating an optical sensing measurement on the first optical path comprising the dominant branch(es) of the respective adjustable power splitter(s) in the subset.

## Description

### Field of the invention

Various example embodiments relate to communication technology, specifically to optical network.

### Background

Passive Optical Networks (PON) are commonly used to connect users to the internet. The PON system provides data traffic from the Optical Line Terminal (OLT) to multiple Optical Network Units (ONUs) via an Optical Distribution Network (ODN) with a e.g. tree-like architecture by use of pure passive optical power splitters. To avoid collisions among the N users sharing the PON infrastructure, a time-division multiplexing (TDM) protocol is used in downstream and a time-division multiple access (TDMA) protocol is used for upstream. The tree-like structure of the ODN is a drawback for performing sensing measurements from central office side. This is valid for all kind of sensing system using back-reflected light for monitoring means, for example, Optical Time Domain Reflectometry (OTDR), Optical Frequency Domain Reflectometry (OFDR), Distributed Acoustic Sensing (DAS), Distributed Fiber Optic Sensing (DFOS), etc. All lines behind the PON power splitter are in parallel and backscattered light cannot be distinguished and assigned to a specific branch without further means.

OTDR measurements for example are a well-known method to analyze the status of optical fibers. The attenuation profile can be analyzed, and exact distance information of the detected events is available. In case of a power drop, e.g., high attenuation step in the measured attenuation profile, the field force people directly can distinguish the position and start corrective maintenance work. However, for PON access architectures with point to multi point structure, the above-mentioned advantages are only valid for the feeder section between OLT and the first splitter. In the distribution section between different splitter hierarchies and the drop section from the last splitter to the customer premises, the lines are in parallel and events cannot be assigned to specific lines due to ambiguities.

Up to now, there is no solution available to resolve the different branches behind the optical power splitter. Measurements from both sides of the ODN are feasible, however, additional costs and access to the customer premises is required, which is a logistical and legal nightmare for operators. Other solutions combine for example OTDR measurements with other data from the PON system and do an AI based analysis, but even in that case the dynamic range of the OTDR measurement devices and the added system data are not sufficient to resolve the full range of the ODN and for certain events only a limited probability for an assignment to a dedicated line behind the splitter can be given.

Thus, there is a need for a new apparatus for use by an OLT, capable of performing optical sensing on the fiber branches behind the power splitters.

### Summary of the Invention

The invention is set out in the appended set of claims.

According to a first aspect of the invention, there is provided an apparatus for use by an Optical Line Terminal, OLT connected to a plurality of Optical Network Units, ONUs via an Optical Distribution Network, ODN, comprising at least one adjustable power splitter with a variable power split ratio, the apparatus comprising means for: configuring a power split ratio of a subset of the adjustable power splitter(s) related to a first optical path, thereby each adjustable power splitter in the subset distributes substantially more optical power to its dominant branch than to its other branch(es); initiating an optical sensing measurement on the first optical path comprising the dominant branch(es) of the respective adjustable power splitter(s) in the subset.

According to a second aspect of the invention, there is provided a method for an OLT connected to a plurality of ONUs via an ODN comprising at least one adjustable power splitter with a variable power split ratio, comprising: configuring a power split ratio of a subset of the adjustable power splitter(s) related to a first optical path, thereby each adjustable power splitter in the subset distributes substantially more optical power to its dominant branch than to its other branch(es); initiating an optical sensing measurement on the first optical path comprising the dominant branch(es) of the respective adjustable power splitter(s) in the subset.

According to a third aspect of the invention, there is provided a computer program comprising instructions for causing an apparatus to perform at least the following: configuring a power split ratio of a subset of the adjustable power splitter(s) related to a first optical path, thereby each adjustable power splitter in the subset distributes substantially more optical power to its dominant branch than to its other branch(es); initiating an optical sensing measurement on the first optical path comprising the dominant branch(es) of the respective adjustable power splitter(s) in the subset.

According to a fourth aspect of the invention, there is provided an apparatus comprising at least one processor and at least one memory including computer program code, the at least one memory and the computer program code configured to with the at least one processor, cause the apparatus at least to perform: configuring a power split ratio of a subset of the adjustable power splitter(s) related to a first optical path, thereby each adjustable power splitter in the subset distributes substantially more optical power to its dominant branch than to its other branch(es); initiating an optical sensing measurement on the first optical path comprising the dominant branch(es) of the respective adjustable power splitter(s) in the subset.

According to a fifth aspect of the invention, there is provided a non-transitory computer readable medium comprising program instructions for causing an apparatus to perform at least the following: configuring a power split ratio of a subset of the adjustable power splitter(s) related to a first optical path, thereby each adjustable power splitter in the subset distributes substantially more optical power to its dominant branch than to its other branch(es); initiating an optical sensing measurement on the first optical path comprising the dominant branch(es) of the respective adjustable power splitter(s) in the subset.

According to a sixth aspect of the invention, there is provided a computer readable medium comprising program instructions for causing an apparatus to perform at least the following: configuring a power split ratio of a subset of the adjustable power splitter(s) related to a first optical path, thereby each adjustable power splitter in the subset distributes substantially more optical power to its dominant branch than to its other branch(es); initiating an optical sensing measurement on the first optical path comprising the dominant branch(es) of the respective adjustable power splitter(s) in the subset.

According to the example embodiments, the ODN configuration comprising adjustable power splitters with variable power split ratio is used in combination with an optical sensing measurement. It is possible to distinguish the backscattered light from certain path from the OLT side. Thus, it is possible to perform optical sensing measurement on distribution sections and/or drop sections behind the adjustable power splitters from the OLT side, without requiring any data from the ONUs.

### Brief description of the figures

For a more complete understanding of example embodiments of the present invention, reference is now made to the following descriptions taken in connection with the accompanying drawings in which:
Figure 1 shows a schematic block diagram of a network topology according to the state of the art;
Figure 2 shows a schematic block diagram of a network topology according to an example embodiment;
Figures 3 shows a schematic block diagram of a network topology according to another example embodiment;
Figures 4 shows a flow diagram according to example methods implementing various embodiments;
Figure 5 shows an example block diagram of an apparatus 201 operating in accordance with various embodiment;

Same or similar reference numerals refer to same or similar parts or components.

### Detailed description

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps is not limited to the specific embodiments, the method steps may be performed in other possible sequence. Similarly, specific structural and functional details disclosed herein are merely representative for purposes of describing the embodiments. The invention described herein, however, may be embodied in many alternate forms and should not be construed as limited to only the embodiments set forth herein.

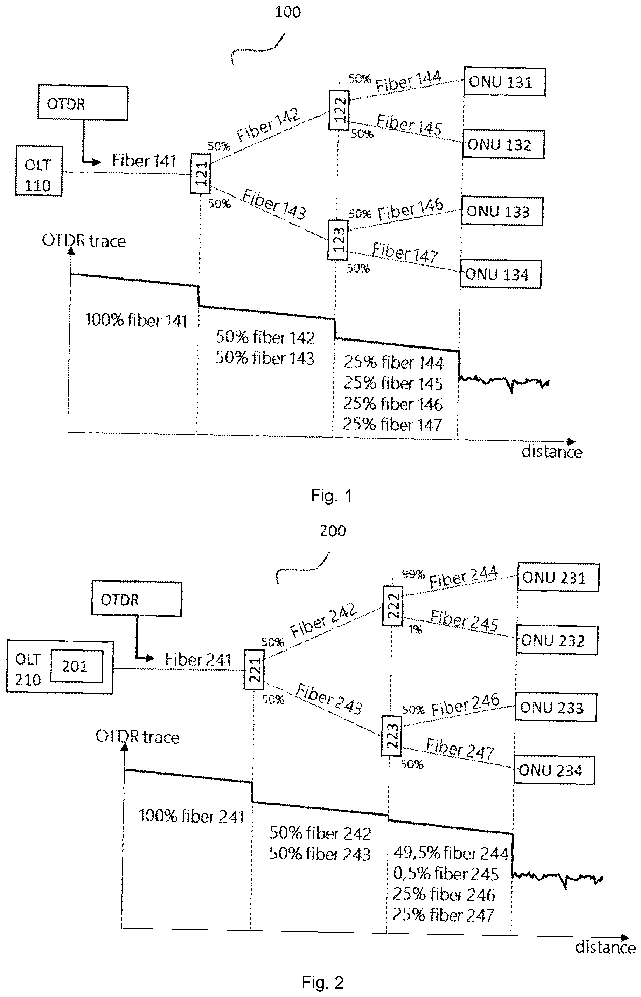

Figure 1 shows a schematic block diagram of a network topology according to the state of the art.

A PON 100 is shown in the top part of Figure 1. In the PON 100, an OLT 110 at the network side is communicatively connect to a plurality of ONUs 131, 132, 133, 134 at the user side by means of an ODN comprising optical fibers 141, 142, 143, 144, 145, 146, 147 and power splitters 121, 122,123, but no active components. The number of fibers, ONUs and the power splitters is given merely as an example. In other examples, the OLT 110 may be connected to more or less ONUs via more or less power splitters and fibers. In one example, the OLT 110 may be connected to 64 ONUs via 6 cascaded power splitters respectively with one input port and two output branches. With the development of the technique, it is also possible to have a power splitter with one input port and multiple output branches. For simplicity, only part of the PON 100 is shown in the Figure 1. A skilled person should understand that the PON may comprise further components.

Specifically, in the example shown in Figure 1, the OLT 110 is connected to the input port of the power splitters 121 at the first cascade level via fiber 141. The output branches of the power splitters 121 are connected to the input ports of the power splitters 122 and 123 at the second cascade level via fibers 142 and 143, respectively. In the present disclosure, the cascade level closer to the OLT may be referred to as higher level. Namely, the first cascade level is higher than the second cascade level. The output branches of the power splitters 122 are connected to the ONUs 131 and 132 via fiber 144 and 145, respectively. The output branches of the power splitters 123 are connected to the ONUs 133 and 134 via fiber 146 and 147, respectively.

In the example shown in Figure 1, the power splitters divide the input optical power down from the OLT to the various users, respectively combine the signals from different users in the opposite direction. The power splitters which are used for PON applications may show an equal power split ratio for the individual branches with a splitter port number of 2ⁿ (n=1, 2,3, ...). In other words, the power splitters may distribute their input optical power approximately equally among its output branches. The optical power at the output of the different splitter ports at the same cascade level is in first order identical (neglecting manufacturing tolerance) and cannot be modified.

The bottom part of Figure 1 shows a corresponding OTDR trace of the PON 100 as a function of distance from the OLT.

Specifically, the power splitter 121 distributes 50% of its input optical power on to fiber 142, and 143 respectively. The power splitter 122 again distributes 50% of its input optical power on to fiber 144 and 145 respectively. Since the input optical power of the power splitters 122 is 50% of the output optical power of the OLT, the optical power on fiber 144 and 145 is 25% of the output optical power of the OLT, without considering the loss. The power splitter 123 may have similar behaviors.

It can be seen that after the first splitter, fiber 142 and 143 are superimposed in the OTDR trace. In this exemplary drop section four fibers are parallel to each other, and it is impossible to assign events to one of these lines without additional means. In other words, since the optical power from each branch at the same cascade level is the same, it is not possible for the OLT to determine the source branch of the back reflected light. If for example an OTDR signal is injected on to the ODN form the OLT side, it is only possible to obtain valid measurements for the feeder section.

Figure 2 shows a schematic block diagram of a network topology according to an example embodiment.

In the example shown in Figure 2, the PON 200 is constructed similarly as PON 100 as described in Figure 1. The components similar or same as described above with respect to Figure 1 will not be repeated for simplicity.

Specifically, in the example shown in Figure 2, at least one of the power splitters in the ODN is an adjustable power splitter with variable power split ratio.

There is prior art using adjustable power splitters with variable power split ratio inside the ODN with the purpose of reusing the available system margin to optimize the power levels at the ONU receivers and to improve SNR values. Throughput optimization for dedicated users or for the total system can be achieved too.

Various embodiments use the adjustable power splitters for the purpose of optical sensing measurement on the OLT side.

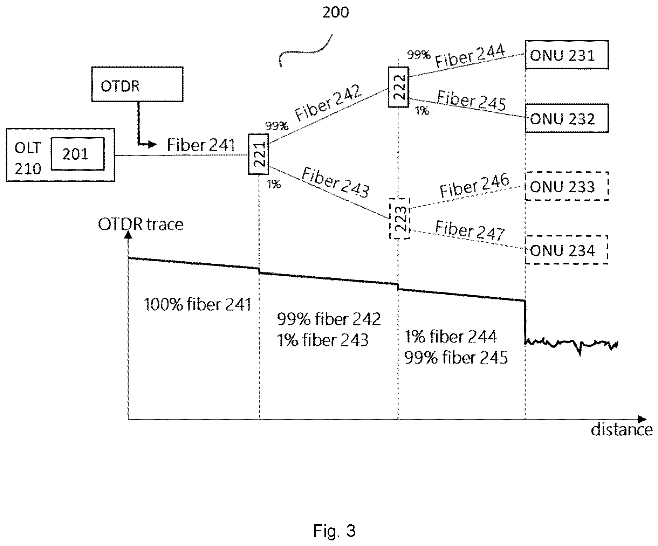

In the example show in Figure 2, only the power splitter 222 is an adjustable power splitter. In another example as will be described later with respect to Figure 3, all the power splitters in the ODN are adjustable power splitters.

Specifically, the power splitters with fixed power split ratio in the existing ODN may be gradually replaced by the adjustable power splitters.

In the example shown in Figure 2, the apparatus 201 is suitable for use by an OLT 210. In the example of Figure 2, the apparatus 201 may be implemented in the OLT 210 as part of the OLT. In another example, the apparatus 201 may be implemented outside the OLT 210 and coupled to the OLT 210 in an appropriate manner.

According to various embodiments, the apparatus 201 configures a power split ratio of a subset of the adjustable power splitter(s) related to a first optical path, thereby each adjustable power splitter in the subset distributes substantially more optical power to its dominant branch than to its other branch(es).

Specifically, the apparatus 201 may configure the power split ratio of the subset of the adjustable power splitter(s) by sending a message to the subset of the adjustable power splitter(s). Specifically, the message may comprise information about a percentage of the optical power that each adjustable power splitter in the subset should distribute on to one or more of its output branches.

More specifically, for a 1 by 2 power splitter with one input port and two output branches, the split ratio may be given by x% and (100-x)% respectively.

In the present disclosure, "substantially more" may be for example at least 10% more. The percentage of the split ratio is not limited to the given example, it may be related to the sensitivity of the OTDR reflectometer as will be explained later.

In the example shown in Figure 2, there is only one adjustable power splitter 222 in the subset of the adjustable power splitter. The power split ratio of the adjustable power splitter 222 may be configured to be 99% and 1%. Accordingly, the adjustable power splitter 222 distributes 99% of its input optical power onto fiber 244.

The bottom part of Figure 2 shows a corresponding OTDR trace of the PON 200 as a function of distance from the OLT.

Since the other power splitters 221 and 223 are not adjustable and distribute their input optical power equally among their output branches, the optical power on the fibers 242 and 243 is 50% of the output optical power of the OLT without considering loss. The optical power on the fiber 244 is 49.5%, the optical power on the fiber 245 is 0.5%, the optical power on the fibers 246 and 247 is 25% of the output optical power of the OLT, without considering loss. Since the different drop lines are still superimposed, but OTDR events from fiber 244 show double amplitude compared to similar events on fiber 246 and 247. A variation of the split ratio and comparison of the different measurements will allow to assign events to dedicated drop fibers.

In another example with a plurality of adjustable power splitters in the subset, the plurality of adjustable power splitters in the subset may be directly or indirectly cascaded with their dominant branches forming a part of the first optical path.

Specifically, the first optical path may be a path for light originating from the OLT propagating in downstream direction. In one example, the first optical path may a path from the OLT to the dominant branch of the adjustable power splitter at the lowest cascade level in the subset.

In another example, the power splitter 221 in Figure 2 may be the only adjustable power splitter in the subset. The first optical path may a path from the OLT via fiber 241 to fiber 242 or 243, according to which branch of the power splitter 221 is configured to be dominant branch.

According to various embodiments, the apparatus 201 initiates an optical sensing measurement on the first optical path comprising the dominant branch(es) of respective adjustable power splitter(s) in the subset.

Specifically, in one example, the apparatus 201 may initiate the optical sensing measurement by sending a message to an OTDR reflectometer implemented outside the apparatus 201, or even outside the OLT 210. In another embodiment, the OTDR reflectometer may also be implemented inside the OLT 210 or the apparatus 201. The optical sensing measurement may be implemented by the OTDR reflectometer.

In one embodiment, the first optical path may be a path from the OLT to a first ONU. Specifically, in the example shown in Figure 2, the first optical path may be the path from the OLT to the ONU 231 and may comprise fibers 241, 242 and 244.

Since the optical power distributed onto fiber 244 is substantially higher than the other branches at the same cascade level, it is possible for the OTDR reflectometer inside or outside the apparatus 201 or the OLT to distinguish the back reflected light from the fiber 244 from the back reflected light from fiber 245, 246, and 247. The split ratio for the dominant branch may be determined as a value that is sufficient for the OTDR reflectometer to assign events to the dominant branch. As a result, optical sensing measurement may be performed on the first optical path along fiber 241, 242 and 244.

In one embodiment, the optical sensing measurement may comprise at least one of: OTDR, OFDR, DAS, DFOS. With development of the technique, the optical sensing measurement may also be other measurement relying of the back reflected light from the fiber.

Specifically, an OTDR reflectometer may transmit a specific optical signal onto the ODN from the OLT side. The specific optical signal may have a wavelength different from the wavelength used for data transmission in the PON. For example, specific optical signal may have a wavelength in a range from 1625nm to 1675nm, different from the wavelength ranges, which are designated for PON transmission. OTDR may provide various results that help assess the performance and integrity of an optical fiber link.

In one example, the OTDR reflectometer may provide various measurement results to the apparatus 201 or the OLT 210. In yet another example, the OTDR reflectometer may transmit a signal back to the apparatus 201 indicating the optical sensing measurement is completed.

A skilled person knows various ways of performing an optical sensing measurement on an optical path, for simplicity it will not be further elaborated here.

In one embodiment, the apparatus 201 may obtain information related to the first optical path on which the optical sensing measurement should be performed.

In one embodiment, the apparatus 201 may receive a request for the optical sensing measurement on the first optical path. Specifically, the information related to the first optical path may be carried by the request for the optical sensing measurement.

The request may be sent by other function block of the OLT 210, and may be triggered periodically, or upon certain event like malfunction and initialization etc. to reduce the impact to the ODN data transmission and to detect aging effects or small degradations.

Alternatively, the apparatus 201 may also trigger the configuring of the power split ratio and the optical sensing measurement by itself, for example, during deployment phase of the ODN (birth certificate) or once a problem in the ODN is observed or at predetermined time intervals. The predetermined time intervals may be pre-scheduled maintenance intervals.

Specifically, it is possible to implement initialization measurements for all segments individually. There will be no interruption to traffic. In case of link failure since there is potential interruption of traffic to functional ONUs, a protocol may be implemented to take decision on whether the optical sensing measurements should be executed. It is also possible to predefine maintenance windows e.g. during night.

Furthermore, the apparatus 201 may determine the subset of the adjustable power splitter(s) related to the first optical path based on the information related to the first optical path.

In the example shown in Figure 2, the apparatus 201 may obtain information indicating that an optical sensing measurement should be performed on the first optical path from OLT to the fiber 244. The apparatus 201 may determine the power splitters 221 and 222 as relevant power splitters. Since the power splitter 221 is not adjustable, the subset of the adjustable power splitter, the split ratio of which should be adjusted, may be determined as comprising the adjustable power splitter 222 only.

Furthermore, the apparatus 201 may also determine the dominant branch of the subset of the adjustable power splitter(s) based on the information related to the first optical path, such that the dominant branch 244 of the adjustable power splitters 222 forms a part of the first optical path.

Specifically, in the example shown in Figure 2, the apparatus 201 may determine the dominant branch of the adjustable power splitter 222 as the branch connected to the fiber 244. More specifically, the split ratio of the adjustable power splitter 222 may be determined as 99% for the branch connected to the fiber 244, and 1% for the branch connected to the fiber 225.

Alternatively, in another example, the subset of the adjustable power splitter(s), the split ratio of which should be adjusted, and/or the split ratio of the subset of the adjustable power splitter(s) may be determined outside the apparatus 201, for example by other function block in the OLT 210.

The apparatus 201 may receive, for example from other function block of the OLT 210, a message comprising an indication of the subset of the adjustable power splitter(s) related to the first optical path, and/or an indication of the dominant branch of the subset of the adjustable power splitter(s) related to the first optical path.

In yet another example, the split ratio may be predetermined, for example, as 99% for the branch on which the optical sensing measurement is to be performed.

Figure 3 shows a schematic block diagram of a network topology according to another example embodiment.

Components similar or same as described above with respect to Figures 1 and 2 will not be repeated for simplicity.

In the example shown in Figure 3, the optical sensing measurement is to be performed on the first optical path from the OLT 210 to the ONU 231.

In one example, the subset of adjustable power splitters related to the first optical path may comprise one adjustable power splitter in each cascade level. In another example with more cascade levels, the adjustable power splitters in the subset are respectively cascaded to the dominant branch of the adjustable power splitters in the higher cascade level.

Specifically, all the power splitters 221, 222 along the first optical path from the OLT 210 to the ONU 232 are adjustable. Thus, the subset of the adjustable power splitters may comprise both of the adjustable power splitters 221, 222 that are directly cascaded. The dominant branches 242, 244 of the adjustable power splitters 221, 222 in the subset may be determined according to the first optical path, on which the optical sensing measurement is to be performed. Thereby, dominant branches 242, 244 of the adjustable power splitters 221, 222 form a part of the first optical path.

Advantageously, it is possible increase the available power along a dedicated path and to establish a virtual point-to-point link to a specific user and to allow for an exclusive OTDR measurement of this path from the OLT to a single ONU.

Specifically, the apparatus 201 may configure the power split ratio of the subset of the adjustable power splitter(s), thereby each adjustable power splitter in the subset distributes not less than 90% of its input optical power of onto its dominant branch.

Specifically, in the example shown in Figure 3, the adjustable power splitters 221 and 222 are configured to distribute 99% of their input optical power of onto their dominant branch 242 and 244, respectively.

In this case, the back scattered signals from the other non-dominant port are minimized, and the data communication between the OLT and all the ONUs will be interrupted.

In one embodiment, before the optical sensing measurement, and before data transmission is interrupted, the apparatus 201 may transmit a message to at least one of ONUs 231, 232, 233, 234 indicating that data transmission will be interrupted for the optical sensing measurement.

In another embodiment, data communication between the OLT and at least one of the ONUs irrelevant to the first optical path may be maintained during the optical sensing measurement on the first optical path.

Specifically, the apparatus 201 may determine the power split ratio of the subset of the adjustable power splitter(s) based on a feedback from at least one of the ONUs irrelevant to the first optical path, for example ONU 232, 233 and 234 as shown in Figure 2, such that a data transmission between the OLT and the at least one of the ONUs irrelevant to the first optical path is maintained during the optical sensing measurement on the first optical path.

Reference is made to the topology shown in Figure 3, in one example, the power split ratio of the adjustable power splitter 222 may be determined as 75% for the dominant branch. The data transmission between the OLT 210 and the ONU 232 may be kept alive with the adjustable power splitter 222 distributing 25% of its input optical power onto the fiber 245, since the input optical power of the adjustable power splitter 222 is 99% of the output optical power of the OLT, without considering the loss. The optical sensing measurement may be performed on the first optical path from the OLT 210 to the ONU 231 without interrupting the data communication between the OLT 210 and the ONU 232.

For example, the feedback from the ONU, the data transmission for which should be maintained, may comprise Bit Error Ratio (BER), Received Signal Strength Indicator (RSSI), Forward Error Correction (FEC) parameters, frame loss indicator or dying gasp message, etc. The power split ratio of the adjustable power splitters may be gradually adjusted according to the feedback.

In another example, with proper configuration of the power split ratio of the adjustable power splitters, for example with 75% to the dominant branch, and the 25% to the non-dominant branch, it is possible to keep the data communication between the OLT and all the ONUs irrelevant to the first optical path during the optical sensing measurement on the first optical path alive.

In one embodiment, the apparatus 201 may repeat the configuring of the power split ratio and the optical sensing measurement at predetermined time intervals, for example, when no or only a reduced number of users is active, e.g. during night.

In one embodiment, after the optical sensing measurement, the apparatus 201 may adjust the power split ratio of the subset of the adjustable power splitter(s) back to the nominal configuration, thereby each adjustable power splitter in the subset distributes its input optical power approximately equally among its branches.

In the example shown in Figures 2 and 3, the nominal configuration adjustable power splitter(s) may be 50%/50% for the respective output branches.

The PON may be restarted after the adjustable power splitter(s) are configured back to the nominal configuration.

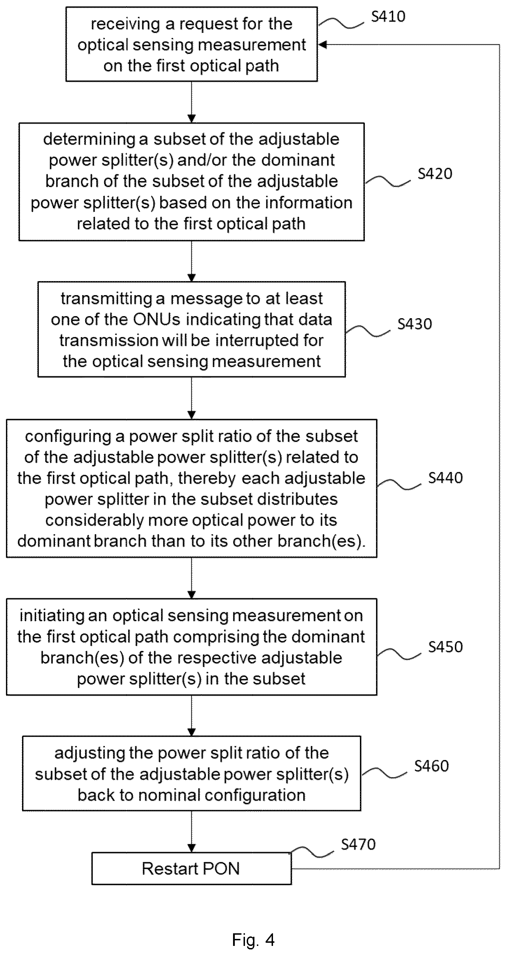

Figure 4 shows a flow diagram according to example methods implementing various embodiments.

In the example of Figure 4, all method steps may be implemented in the apparatus 201 inside the OLT. Alternatively, some of the method steps may be implemented by the OLT, and some of the method steps may be implemented for example in the apparatus 201 outside the OLT and connected to the OLT.

In Figure 4, in step S410, the method starts with receiving a request for the optical sensing measurement on the first optical path. An information related to the first optical path may be obtained from the request for the optical sensing measurement.

In step S420, the method continues with determining a subset of the adjustable power splitter(s) and/or the dominant branch of the subset of the adjustable power splitter(s) based on the information related to the first optical path.

In step S430, the method continues with transmitting a message to at least one of the ONUs indicating that data transmission will be interrupted for the optical sensing measurement.

In step S440, the method continues with configuring a power split ratio of the subset of the adjustable power splitter(s) related to a first optical path, thereby each adjustable power splitter in the subset distributes substantially more optical power to its dominant branch than to its other branch(es).

In step S450, the method continues with initiating an optical sensing measurement on the first optical path comprising the dominant branch(es) of the respective adjustable power splitter(s) in the subset.

Although not shown in Figure 4, the method may additionally comprise a step of determining whether the optical sensing measurement is completed. If the optical sensing measurement is completed, the method continues with step S460.

In step S460, the method continues with adjusting the power split ratio of the subset of the adjustable power splitter(s), thereby each adjustable power splitter in the subset distributes its input optical power approximately equally among its branches.

In step S470, the method ends with restating the PON. The procedure described above for performing the optical sensing measurement may be repeated at predetermined intervals or upon trigger event like malfunction and initialization etc.

A skilled person should understand, the steps S410, S420, S430, S460 and S470 are optional.

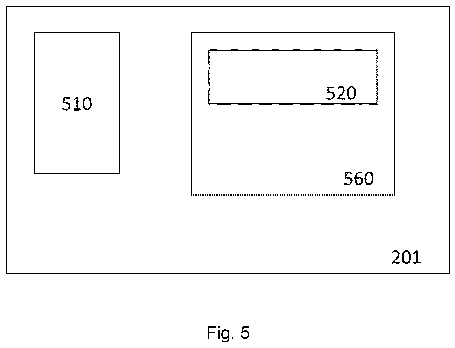

Figure 5 shows an example block diagram of an apparatus 201 operating in accordance with various embodiment.

Specifically, the apparatus 201 includes a processor 510 and a memory 560. In other examples, the apparatus 201 may comprise multiple processors.

In the example of Figure 5, the processor 510 is a control unit operatively connected to read from and write to the memory 560. The processor 510 may also be configured to receive control signals received via an input interface and/or the processor 510 may be configured to output control signals via an output interface. In an example embodiment the processor 510 may be configured to convert the received control signals into appropriate commands for controlling functionalities of the apparatus.

The memory 560 stores computer program instructions 520 which when loaded into the processor 510 control the operation of the apparatus 201 as explained above. In other examples, the apparatus 201 may comprise more than one memory 560 or different kinds of storage devices.

Computer program instructions 520 for enabling implementations of example embodiments of the invention or a part of such computer program instructions may be loaded onto the apparatus 201 by the manufacturer of the apparatus, by a user of the apparatus, or by the apparatus itself based on a download program, or the instructions can be pushed to the apparatus by an external device. The computer program instructions may arrive at the apparatus via an electromagnetic carrier signal or be copied from a physical entity such as a computer program product, a memory device or a record medium such as a Compact Disc (CD), a Compact Disc Read- Only Memory (CD-ROM), a Digital Versatile Disk (DVD) or a Blu-ray disk.

According to an example embodiment, the apparatus 201 comprises means, wherein the means comprises at least one processor 510, at least one memory 560 including computer program code 520, the at least one memory 560 and the computer program code 520 configured to, with the at least one processor 510, cause the performance of the apparatus 201.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer- readable medium' may be any media or means that can contain, store, communicate, propagate or transport the instructions for use by or in connection with an instruction execution system, apparatus, or device, such as a computer. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

It will be obvious to a person skilled in the art that, as the technology advances, the inventive concept can be implemented in various ways. The invention and its embodiments are not limited to the examples described above but may vary within the scope of the claims.

## Claims

1. An apparatus (201) for use by an Optical Line Terminal, OLT (210) connected to a plurality of Optical Network Units, ONUs (231, 232, 233, 234) via an Optical Distribution Network, ODN, comprising at least one adjustable power splitter with a variable power split ratio, the apparatus (201) comprising means for:
- configuring a power split ratio of a subset of the adjustable power splitter(s) (221, 222) related to a first optical path, thereby each adjustable power splitter in the subset distributes substantially more optical power to a dominant branch than to other branch(es);
- initiating an optical sensing measurement on the first optical path comprising the dominant branch(es) of the respective adjustable power splitter(s) in the subset.

2. The apparatus (201) according to claim 1, wherein the adjustable power splitters in the subset are directly or indirectly cascaded with their dominant branches forming a part of the first optical path.

3. The apparatus (201) according to any preceding claim, wherein the means are further configured for:
- obtaining an information related to the first optical path;
- determining the subset of the adjustable power splitter(s) and/or the dominant branch of the subset of the adjustable power splitter(s) based on the information related to the first optical path.

4. The apparatus (201) according to any preceding claim, wherein the means are further configured for:
- receiving from the OLT (210) an indication of the subset of the adjustable power splitter(s) related to the first optical path, and/or an indication of the dominant branch of the subset of the adjustable power splitter(s) related to the first optical path.

5. The apparatus (201) according to any preceding claim, wherein the first optical path is a path from the OLT (210) to a first ONU.

6. The apparatus (201) according to any preceding claim, wherein the means are further configured for:
- configuring the power split ratio of the subset of the adjustable power splitter(s), thereby each adjustable power splitter in the subset distributes not less than 90% of its input optical power of onto its dominant branch.

7. The apparatus (201) according to any preceding claim, wherein the means are further configured for:
- transmitting a message to at least one of the ONUs indicating that data transmission will be interrupted for the optical sensing measurement.

8. The apparatus (201) according to any of claims 1-5, wherein the means are further configured for:
- determining the power split ratio of the subset of the adjustable power splitter(s) based on a feedback from at least one of the ONUs irrelevant to the first optical path, such that a data transmission between the OLT (210) and the at least one of the ONUs irrelevant to the first optical path is maintained during the optical sensing measurement on the first optical path.

9. The apparatus (201) according to claim 1, wherein the means are further configured for:
- repeating the configuring of the power split ratio and the optical sensing measurement at predetermined time intervals.

10. The apparatus (201) according to any preceding claim, wherein the means are further configured for:
- receiving a request for the optical sensing measurement on the first optical path.

11. The apparatus (201) according to any preceding claim, wherein the means are further configured for:
- adjusting, after the optical sensing measurement, the power split ratio of the subset of the adjustable power splitter(s), thereby each adjustable power splitter in the subset distributes its input optical power approximately equally among its branches.

12. The apparatus (201) according to any preceding claim, wherein the optical sensing measurement comprises at least one of: Optical Time-Domain Reflectometry, OTDR, Optical Frequency Domain Reflectometry, OFDR, Distributed Acoustic Sensing, DAS, Distributed Fiber Optic Sensing, DFOS.

13. The apparatus (201) according to any preceding claim, wherein the first optical path may be a path for light originating from the OLT (210) propagating in downstream direction.

14. A method for an OLT (210) connected to a plurality of ONUs (231, 232, 233, 234) via an ODN comprising at least one adjustable power splitter with a variable power split ratio, comprising:
- configuring a power split ratio of a subset of the adjustable power splitter(s) (221, 222) related to a first optical path, thereby each adjustable power splitter in the subset distributes substantially more optical power to a dominant branch than to other branch(es);
- initiating an optical sensing measurement on the first optical path comprising the dominant branch(es) of the respective adjustable power splitter(s) in the subset.

15. A computer program comprising instructions for causing an apparatus to perform at least the following:
- configuring a power split ratio of a subset of the adjustable power splitter(s) (221, 222) related to a first optical path, thereby each adjustable power splitter in the subset distributes substantially more optical power to a dominant branch than to other branch(es);
- initiating an optical sensing measurement on the first optical path comprising the dominant branch(es) of the respective adjustable power splitter(s) in the subset.
